Europäisches Patentamt

European Patent Office

Office européen des brevets

(19)

(11) Veröffentlichungsnummer: **0 1 1 2 537**
**B1**

# (12) EUROPÄISCHE PATENTSCHRIFT

(45) Veröffentlichungstag der Patentschrift:
01.04.87

(51) Int. Cl.⁴: **C 09 B 67/42**

(21) Anmeldenummer: **83112560.4**

(22) Anmeldetag: **14.12.83**

(54) **Erhöhung der Selbstentzündungstemperatur von organischen Farbstoffen und derartige Farbstoffpräparate.**

(30) Priorität: **18.12.82 DE 3247216**

(43) Veröffentlichungstag der Anmeldung:
**04.07.84 Patentblatt 84/27**

(45) Bekanntmachung des Hinweises auf die Patenterteilung:
**01.04.87 Patentblatt 87/14**

(84) Benannte Vertragsstaaten:
**CH DE FR GB LI**

(56) Entgegenhaltungen:
**EP - A - 0 052 716
EP - A - 0 063 300
DE - B - 2 936 762
GB - A - 2 016 056
US - A - 2 142 115**

**SOVIET INVENTIONS ILLUSTRATED, Woche B05, 14. März 1979, Zusammenfassung 09567B/05, London, GB**

(73) Patentinhaber: **HOECHST AKTIENGESELLSCHAFT, Postfach 80 03 20, D-6230 Frankfurt am Main 80 (DE)**

(72) Erfinder: **Rosenbusch, Kurt, Dr., Loreleistrasse 16, D-6230 Frankfurt am Main 80 (DE)**
Erfinder: **Hertel, Hasso, Dr., Brunnenweg 10, D-6052 Mühlheim/Main (DE)**

## Beschreibung

Die Erfindung liegt vorwiegend auf dem Gebiet der Sicherung von Selbstentzündungen von Stäuben organischer Farbstoffe.

Organische Farbstoffe sind als Kohlenstoffverbindungen in Gegenwart von Sauerstoff brennbar. Dieser Oxidationsprozess läuft zwar erst bei erhöhten Temperaturen ab, jedoch kann sich deren Selbstentzündungstemperatur dann wesentlich erniedrigen, – wie auch für andere organische Verbindungen bekannt – wenn sie in feinverteilter Form mit hoher Oberfläche, wie in Form von Pulvern, insbesondere Stäuben, vorliegen.

Diejenige Temperatur, bei der der Oxidationsprozess merkbar einsetzt, wird als Selbstentzündungstemperatur bezeichnet. Deren Bestimmung kann zum Beispiel in einer Apparatur nach Grewer (s. Staub – Reinhaltung der Luft, Band 31 (1971), S. 97–101) erfolgen. Hierbei wird in einer bestimmten Strömungsapparatur die zu untersuchende Substanz in einem Luftstrom, dessen Temperatur mit einer Geschwindigkeit von 1°C/min erhöht wird, zusammen mit einer selbstentzündungsindifferenten Referenzprobe langsam erwärmt; beide Proben enthalten Thermofühler (Thermoelemente). Als Selbstentzündungstemperatur gilt diejenige Temperatur, bei welcher die Temperatur der zu untersuchenden Substanzprobe gegenüber der miterhitzten indifferenten Probe deutlich zu steigen beginnt.

Eine andere Bestimmungsmöglichkeit der Selbstentzündungstemperatur ist von G. Leusche in Staub – Reinhaltung der Luft, Band 26 (1966), S. 49 ff., insbesondere S. 53, beschrieben, wonach abgelagerte Stäube in einem hierfür geeigneten Trockenschrank bei verschiedenen Temperaturen isotherm gelagert werden und beobachtet wird, bei welcher Temperatur die Selbstentzündung dieser Stäube erfolgt.

Wegen der Selbstentzündbarkeit von organischen Farbstoffen müssen deshalb, insbesondere im technischen Betrieb, beim Arbeiten mit diesen selbstentzündbaren Stoffen in Gegenwart von Sauerstoff (Luft) solche Temperaturen eingehalten werden, die noch ausreichend von der Selbstentzündungstemperatur entfernt sind. Dies führt jedoch bei vielen organischen Farbstoffen zu wesentlichen Beschränkungen bei deren Herstellung und Weiterverarbeitung (Verwendung). Es stellte sich somit die Aufgabe, bei diesen selbstentzündbaren Produkten die Selbstentzündungstemperatur durch entsprechende Massnahmen zu erhöhen.

Es wurde gefunden, dass dies gelingt, wenn man dem organischen Farbstoff, bevorzugt wasserlöslichen organischen Farbstoff, ein Ammonium-, Alkali- oder Erdalkalimetallsalz der Amidoschwefelsäure, der Imido-bisschwefelsäure oder der Nitrido-trisschwefelsäure, oder ein Gemisch derselben, zusetzt bzw. mit dem Farbstoff vermischt. Die vorliegende Erfindung betrifft somit die Verwendung solch eines Salzes oder eines Gemisches derselben zur Erhöhung der Selbstentzündungstemperatur von organischen, vorzugsweise wasserlöslichen, Farbstoffen, insbesondere von deren Farbstoffpulvern.

Die erfindungsgemäss verwendbaren Salze können dem organischen Farbstoff zu unterschiedlichen Zeitpunkten zugesetzt bzw. zugemischt werden, so dem Farbstoff in fester Form selbst, welcher in pastöser Form, bspw. als Nutschkuchen, oder als Pulver, so in Granulatform – von unterschiedlicher Korngrösse – und insbesondere in Staubform, vorliegen kann, insbesondere aber bereits in Form der Farbstofflösung, so beispielsweise der Syntheselösung des Farbstoffes, die zur Isolierung des Farbstoffes eingedampft, insbesondere sprühgetrocknet wird. Ebenso können die erfindungsgemäss verwendeten Salze auch bereits Vorprodukten der Synthese dieser Farbstoffe zugesetzt werden wobei jedoch zu beachten ist, dass diese erfindungsgemäss verwendbaren Salze nicht bereits in solchen Syntheseschritten vorliegen, in welchen diese Salze selbst Umsetzungen eingehen, wie beispielsweise die Amidoschwefelsäure mit der salpetrigen Säure bei der Diazotierungsreaktion.

Durch die erfindungsgemässe Verwendung der Ammonium-, Alkali- und Erdalkalisalze der genannten drei N-Schwefelsäuren gelingt es in überraschender Weise, die Selbstentzündungstemperatur organischer Farbstoffe, insbesondere wenn sie in feiner Pulver- oder Staubform vorliegen, teilweise um mehr als 100°C zu erhöhen.

Die Amidoschwefelsäure (in der Literatur auch als Amidosulfonsäure oder Sulfaminsäure bezeichnet) hat die chemische Formel $H_2N\text{-}SO_3H$. Die Imido-bisschwefelsäure (in der Literatur auch als Imino-dischwefelsäure oder Iminodisulfonsäure bezeichnet) hat die chemische Formel $HN(SO_3H)_2$, und die Nitrido-trisschwefelsäure (in der Literatur auch als Nitrilotrisulfonsäure bezeichnet) hat die chemische Formel $N(SO_3H)_3$.

Die Imido-bisschwefelsäure und die Nitrido-trisschwefelsäure können erfindungsgemäss nicht nur in Form ihrer neutralen, sondern auch in Form ihrer sauren Salze eingesetzt werden. Beispiele für solche sauren Salze sind das Dinatrium- oder Diammoniumsalz der Nitrido-trisschwefelsäure und das Mononatrium- oder Monoammoniumsalz der Imido-bisschwefelsäure. Die Imido-bisschwefelsäure kann auch als tribasisches Salz verwendet werden, da das am Stickstoffatom noch befindliche Wasserstoffatom leicht protonisierbar ist; ein Vertreter dieser Salze ist beispielsweise das Trinatriumsalz der Imido-bisschwefelsäure.

Bevorzugt kommen von den erfindungsgemäss verwendbaren Salzen die Ammonium- und die Alkalimetallsalze, wie beispielsweise Natrium- und Kaliumsalze, zur Anwendung. Von den Erdalkalimetallsalzen sind die Calciumsalze hervorzuheben. Die Verwendung des Natriumsalzes der Amidoschwefelsäure (Natriumamidosulfat) ist besonders bevorzugt.

Erfindungsgemäss besonders vorteilhaft werden die Salze der genannten drei N-Säuren bei der Zerstäubungstrocknung (Sprühtrocknung) von wasserlöslichen oder in Wasser fein verteilten Azofarbstoffen verwendet. Zerstäubungstrocknungsverfahren, insbesondere für Azofarbstoffe, werden in letzter Zeit verstärkt benutzt, da sie zum einen produktschonender sind als die früher übliche Methode der Trocknung des abfiltrierten Farbstoffes und zum anderen das Produkt (Farbstoff) bereits in Pulverform liefern, wohingegen der nach dem Trocknen oft harte, feste Nutschkuchen noch gemahlen werden muss. Bei der Zerstäubungstrocknung wird die Farbstofflösung (oder -suspension) mittels einer Einstoff- oder Zweistoffdüse oder einer rotierenden Scheibe in feine Tröpfchen zerrissen und in einen Heissluftstrom eingesprüht, in dem wegen der grossen spezifischen Oberfläche die Trocknung in sehr kurzer Zeit, meist in Bruchteilen von Sekunden, erfolgt. Wegen der Verdampfungswärme des Wassers kühlt sich die eingeführte Heissluft ab, so dass das getrocknete Produkt keiner grossen Wärmebeanspruchung ausgesetzt ist.

Bei der Zerstäubungstrocknung organischer Farbstoffe verwendet man, je nach Temperaturempfindlichkeit des Farbstoffes, Eingangstemperaturen der Heissluft von etwa 130 bis 250°C; bei dieser Sprühtrocknung wird das Mengenverhältnis Heissluft/Farbstofflösung in der Regel so gewählt, dass man nach der Zerstäubung zu einer Endtemperatur der Luft und somit des sprühgetrockneten Farbstoffes bzw. des Farbstoffpulvers von 80 bis 100°C gelangt; niedrigere Endtemperaturen werden vermieden, da die Restfeuchte des sprühgetrockneten (zerstäubten) Produktes (Farbstoffes) zu hoch ist.

Bei normalem Verlauf der Zerstäubungstrocknung ist die Temperaturbelastung des Feststoffes (Farbstoffes) durch die Endtemperatur gegeben, so dass, wie oben bereits erwähnt, die Wärmebeanspruchung des Farbstoffes für die Sicherheit des Betriebes keine Bedeutung besitzt, da bei diesem üblichen Endtemperaturbereich von 80 bis 100°C mit einer Selbstentzündung des Farbstoffes nicht gerechnet zu werden braucht. Hingegen wird bei Betriebsstörungen, beispielsweise solchen, die durch Unterbrechung des Zulaufs der Flüssigphase bedingt sind, die Eingangstemperatur, d.h. die Temperatur der eingeführten Heissluft, bestimmend. Aus Sicherheitsgründen muss deshalb die Temperatur der Heissluft stets etwas niedriger als die Selbstentzündungstemperatur des Produktpulvers, bspw. des Farbstoffpulvers, sein. Durch diese zu beachtende Massnahme wird jedoch der für die Trocknung aufzuwendende Energiebedarf sehr hoch, da dieser mit sinkender Temperaturdifferenz von Eingangs- und Endtemperatur ansteigt.

Die Verwendung der Amidoschwefelsäure und deren Ammoniumsalz ist zwar schon in feuerhemmenden oder die Entflammbarkeit erschwerenden Präparaten, die bereits feuerhemmende Substanzen, wie beispielsweise bestimmte Harnstoff-Formaldehyd-Harze, Stärke- und Proteinprodukte, enthielten, beschrieben worden (vgl. US-PS 2 452 054 und deutsche Patentschrift 904 524). Diese feuerhemmenden Präparate dienten zum einen als Anstrichmittel für den Flammschutz von Holz, zum anderen als wasser- und waschbeständiges Imprägniermittel zum Flammschutz von Cellulosefasern oder ähnlichen Holzprodukten. Die Amidoschwefelsäure und deren Ammoniumsalz wurden aber auch bereits alleine als feuerhemmende Mittel für nicht-faserige Cellulosefasermaterialien verwendet, wobei diese Materialien mit einer wässrigen Lösung oder Dispersion der Amidoschwefelsäure oder deren Ammoniumsalz behandelt wurden (vgl. US-PS 2 142 116). In ähnlicher Weise wird in der US-PS 2 142 15 die Verwendung der Amidoschwefelsäure und deren Ammoniumsalz für die feuerhemmende Wirkung von Textilien und anderen flächigen Gebilden, wie Papier und Folien aus Cellulosederivaten, beschrieben. Hierbei wird kurz erwähnt, dass diese Mittel auch Cellulosenitrat-Präparationen zugesetzt werden können, die Pigmente und Weichmacher enthalten. In allen Fällen sollte die Amidoschwefelsäure oder deren Ammoniumsalz bewirken, dass sie sich bei Erhitzung gasförmig zu nichtbrennbaren Stoffen zersetzen oder bei der Mitverwendung anderer, wie obengenannter, Flammschutzsubstanzen mit diesen Substanzen infolge Zersetzung bei hohen Temperaturen Schäume bilden, die flammhemmend wirken sollen. Keine dieser Literaturstellen legt jedoch nahe, ein Salz der obengenannten drei N-Säuren, wie hier erfindungsgemäss geschehen, dazu zu verwenden, die Selbstentzündungstemperatur von organischen Farbstoffen, insbesondere von deren Pulver, deutlich zu erhöhen. Es war nicht zu erwarten, dass durch die gemäss der vorliegenden Erfindung einsetzbaren Substanzen die Selbstentzündbarkeit von organischen Farbstoffen, insbesondere Farbstoffpulvern, verringert bzw. deren Selbstentzündungstemperatur zum Teil deutlich erhöht werden konnte. Insbesondere war nicht vorauszusehen, dass diese Salze der obengenannten drei N-Säuren bereits bei der Zerstäubungstrocknung der Farbstofflösungen bzw. -suspensionen ohne Zersetzung zugegen sein konnten. Durch diese erfindungsgemäss mögliche Massnahme wird das Betriebsrisiko bei Betriebsstörungen in der Zerstäubungstrocknung wesentlich erniedrigt.

Obgleich die erfindungsgemäss verwendeten Salze der obengenannten drei N-Säuren den organischen Farbstoff «verdünnen», ist die Wirkung der verringerten Selbstentzündbarkeit nicht auf solch einen Verdünnungseffekt des oxidierbaren organischen Materials durch nicht oxidierbares anorganisches Material zurückzuführen; denn die Verwendung von Natriumchlorid, das als Elektrolytsalz üblicherweise in Pulvern von organischen Farbstoffen bzw. in deren Farbstofflösungen enthalten ist, anstelle der genannten erfindungsgemäss verwendeten Salze, zeigt diese Wirkung nicht.

Die erfindungsgemäss verwendbaren Salze der obengenannten drei N-Säuren können insbesondere vorteilhaft für wasserlösliche organische Farbstoffe eingesetzt werden, da sie die Weiterverarbeitung (Anwendung) der wasserlöslichen organischen Farbstoffe nicht beeinträchtigen und wasserlösliche organische Farbstoffe nicht beeinträchtigen und wasserlösliche organische Farbstoffe sowieso mit anorganischen Salzen, wie Natriumchlorid, Kaliumchlorid oder auch Natriumsulfat, für den Handel auf eine bestimmte Typstärke eingestellt werden. Es ist deshalb für die Anwendung der Farbstoffe unerheblich, dass die Farbstoffe (Farbstoffpulver) ein erfindungsgemäss verwendbares Salz der obengenannten drei N-Säuren, die das Elektrolytsalz teilweise oder gänzlich ersetzen können, enthalten.

Dementsprechend sind die obengenannten Salze dieser N-Säuren besonders für wasserlösliche organische Farbstoffe, insbesondere Säurefarbstoffe, hiervon insbesondere Azofarbstoffe, geeignet. Bevorzugt werden sie zur Erhöhung der Selbstentzündungstemperatur von solchen wasserlöslichen, organischen Säurefarbstoffen eingesetzt, die zur Färbung von Wolle oder Leder geeignet sind, wie insbesondere von solchen Polyazofarbstoffen, die in der Europäischen Patentanmeldungs-Veröffentlichung Nr. 0 052 716, insbesondere als Lederfarbstoffe – und weiterhin dort in bevorzugter Form oder in den Beispielen – beschrieben sind. Solche Farbstoffe sind insbesondere Resorcinpechazofarbstoffe, wie solche, die durch Azokupplungsreaktion mit Resorcinpech («Resorcinharz») mit einem diazotierten bzw. tetrazotierten 3- oder 4-Amino-diphenylamin, einem 3,3'- oder 3,4'- oder 4,4'-Diaminodiphenyl oder -diphenylamin oder einem 1,3- oder 1,4-Diaminobenzol (wobei die Benzolkerne dieser Diazo- bzw. Tetrazokomponenten durch einen oder zwei Substituenten aus der Gurppe Sulfo, Nitro, Chlor, Alkyl von 1 bis 4 C-Atomen, Alkoxy von 1 bis 4 C-Atomen und Carboxy substituiert sein können) erhältlich sind.

Von besonderem Interesse ist die vorliegende Erfindung beispielsweise für Azofarbstoffe, die Kupplungsprodukte von diazotierter Sulfanilsäure mit Resorcinpech, Kupplungsprodukte von diazotierter 4'-Nitro-4-amino-diphenylamin-2'-sulfonsäure mit Resorcinpech, Kupplungsprodukte von tetrazotierter 4,4'-Diamino-diphenylamin-2-sulfonsäure mit Resorcinpech, Kupplungsprodukte von diazotierter 4-Aminodiphenylamin-2-sulfonsäure mit Resorcinpech, Kupplungsprodukte von tetrazotiertem 4,4'-Diamino-3,3'-dimethoxydiphenyl mit Salicylsäure und Resorcinpech, Kupplungsprodukte von diazotierter 4'-Nitro-4-amino-diphenylamin-2'-sulfonsäure mit dem Azoprodukt aus diazotierter 1-Amino-8-hydroxy-naphthalin-3,6-disulfonsäure und Resorcinpech und einem solchen Kupplungsprodukt, das mit diazotiertem 2-Chlor-4-nitro-anilin nachgekuppelt wurde, Kupplungsprodukte von tetrazotierter 4,4'-Diamino-diphenylamino-2-sulfonsäure mit 2-Naphthol und Resorcinpech, Kupplungsprodukte von tetrazotierten 4,4'-Diamino-3,3'-dimethoxy-benzol mit Resorcinpech sowie Kupplungsprodukte von tetrazotiertem 4,4'-Diamino-3,3'-dimethyl-benzol mit 1-Amino-8-hydroxynaphthalin-3,6-disulfonsäure und Resorcinpech und solche Kupplungsprodukte, die mit diazotierter 2-Amino-benzolcarbonsäure nachgekuppelt wurden, darstellen.

Die Ammonium-, Alkalimetall- und/oder Erdalkalimetallsalze der obengenannten drei N-Säuren werden den organischen Farbstoffen (seien sie zunächst in Form von Farbstofflösungen oder deren Vorprodukte, seien sie bereits in Form von Pulvern) in der Regel in einer Menge von 5 bis 100 Gew.-%, vorzugsweise von 10 bis 40 Gew.-%, bezogen auf den Farbstoff selbst, zugesetzt.

Die vorliegende Erfindung betrifft demnach auch Farbstoffpräparationen mit erhöhter Selbstentzündungstemperatur von organischen Farbstoffen, die neben üblichen Zusätzen, wie Färbereihilfsmitteln und Elektrolytsalzen, erfindungswesentlich 5 bis 100 Gew.-%, vorzugsweise 10 bis 40 Gew.-%, bezogen auf den organischen Farbstoff selbst, eines Ammonium-, Alkalimetall- oder Erdalkalimetallsalzes der Amidoschwefelsäure, der Imido-bisschwefelsäure oder der Nitrido-trisschwefelsäure, oder eines Gemisches dieser Salze, enthalten.

Organische Farbstoffe, in diesen erfindungsgemässen Färbepräparationen sind hierbei, wie oben bereits erwähnt, vorzugsweise wasserlösliche Farbstoffe, insbesondere Säurefarbstoffe, insbesondere solche für die Färbung von Wolle oder Leder geeignete organische Farbstoffe, die zuvor im Detail bereits erwähnt wurden.

Die Erfindung betrifft weiterhin ein Verfahren zur Herstellung solcher Farbstoffpräparationen mit erhöhter Selbstentzündungstemperatur, bei welchem man wässrige Lösungen, Suspensionen oder Dispersionen der organischen Farbstoffe zusammen mit einem Ammonium-, Alkalimetall- oder Erdalkalisalz der Amidoschwefelsäure, der Imido-bisschwefelsäure oder der Nitrido-trisschwefelsäure, oder Mischungen dieser Salze, der Zerstäubungstrocknung unterwirft oder dass man diese Salze der genannten N-Säuren dem bereits vorliegenden Farbstoffpulver zumischt.

Die nachstehenden Beispiele dienen zur Erläuterung der Erfindung, die Teile sind Gewichtsteile und die Prozentangaben stellen Gewichtsprozente dar, sofern nicht anders vermerkt. Die in den Beispielen erwähnte Diazotierung bedeutet bei entsprechenden Diaminoverbindungen deren Tetrazotierung.

Vergleichsbeispiel 1

a) 139,5 Teile einer 4,4'-Diamino-diphenylamin-sulfonsäure werden mit 500 Teilen Wasser verrührt und sodann mit 232 Teilen einer 32%igen wässrigen Salzsäure versetzt. Nach Zugabe von 500 Teilen Eis diazotiert man die Diaminoverbindung mit 69 Teilen Natriumnitrit in konzentrierter wässriger Lösung. Diese Tetrazoniumsalzsuspension wird sodann zu einer Lösung von 216 Teilen des bei der Resorcinherstellung anfallenden Destillationsrückstandes (sog. Resorcinpech) in 500 Teilen Wasser und 136 Teilen einer 33%igen wässrigen Natronlauge zugegeben; bei Zugabe dieser sauren Diazoniumsalzsuspension in die alkalische Resorcinpechlösung hält man gleichzeitig einen pH-Wert von 10,5 durch entsprechende Zugabe von etwa 190 Teilen einer 33%igen wässrigen Natronlauge.

b) Die hier gemäss a) erhaltene Farbstofflösung wird in einem Sprühtrockner mit Scheibenzerstäubung getrocknet.

Das erhaltene Farbstoffpulver (530 Teile) besitzt eine Selbstentzündungstemperatur von 150°C (bestimmt nach Grewer).

Beispiel 1

Der gemäss dem Vergleichsbeispiel 1 a) erhaltenen Farbstofflösung wird eine Lösung von 210 Teilen Natrium-amidosulfat (der Formel $H_2N-SO_3Na$) zugegeben. Anschliessend wird diese vereinigte Lösung in einem Sprühtrockner mit Scheibenzerstäubung getrocknet.

Das erhaltene Farbstoffpulver (735 Teile) besitzt eine Selbstentzündungstemperatur von 290°C (bestimmt nach Grewer).

(Das Farbstoffpulver kann, wie üblich und ebenso wie das gemäss dem Vergleichsbeispiel 1 b) erhaltene Farbstoffpulver, mit Natriumchlorid handelstypgemäss eingestellt werden.)

Beispiel 2

Der gemäss dem Vergleichsbeispiel 1 a) erhaltenen Farbstofflösung werden 210 Teile eines Gemisches aus gleichen Teilen Natrium-amidosulfat und Dinatrium-imidobissulfat (der Formel $HN(SO_3Na)_2$) zugegeben, und diese Farbstofflösung wird gemäss dem Vergleichsbeispiel 1 b) sprühgetrocknet. Das erhaltene Farbstoffpulver (735 Teile) besitzt eine Selbstentzündungstemperatur von 245°C (bestimmt nach Grewer).

Vergleichsbeispiel 2

a) 122 Teile 4,4'-Diamino-3,3'-dimethoxy-diphenyl werden in 300 Teilen Wasser verrührt; 290 Teile einer 32%igen wässrigen Salzsäure werden hinzugegeben und es wird bis zur vollständigen Hydrochloridbildung weitergerührt. Man tetrazotiert sodann durch langsame Zugabe einer konzentrierten wässrigen Lösung von 69 Teilen Natriumnitrit und hält hierbei durch Aussenkühlung die Temperatur unterhalb 10°C.

Aus diesem Syntheseansatz werden geringe Mengen Rückstand abgetrennt. Das klare hellbraune Filtrat wird zu einer Lösung von 218 Teilen des bei der Resorcinherstellung anfallenden Destillationsrückstandes gegeben, der in 500 Teilen Wasser und 136 Teilen einer 33%igen wässrigen Natronlauge gelöst wurde. Bei der Zugabe wird ein pH-Wert von 10,5 mittels etwa 205 Teilen einer 33%igen wässrigen Natronlauge eingehalten.

b) Die hier gemäss a) erhaltene Farbstoffsuspension wird einer Sprühtrocknung mit einem Scheibenzerstäuber unterworfen.

Das erhaltene Farbstoffpulver (530 Teile) besitz eine Selbstentzündungstemperatur von 170°C (bestimmt nach Grewer).

Vergleichsbeispiel 3

a) 139,5 Teile 4,4'-Diamino-diphenylamin-2-sulfonsäure werden – wie im Vergleichsbeispiel 1 angegeben – diazotiert und – wie dort ebenfalls angegeben – mit 216 Teilen Resorcinpech gekuppelt. Zu dieser Lösung gibt man bei einem pH-Wert von 10,5 eine Diazoniumsalzlösung, die durch Diazotieren von 147 Teilen 2-Aminobenzoesäure in salzsaurer Lösung bei 0 – 5°C mit 69 Teilen Natriumnitrit erhalten wurde. Der pH-Wert wird durch gleichzeitige Zugabe von Natronlauge bei 10,5 gehalten.

b) Diese Farbstofflösung wird in einem Sprühtrockner mit Scheibenzerstäubung getrocknet. Das erhaltene Farbstoffpulver besitzt eine Selbstentzündungstemperatur (bestimmt nach Grewer) von 160°C.

Beispiel 3

Die nach dem obigen Vergleichsbeispiel 2a hergestellte Farbstoffdispersion wird mit 55 Teilen einer 33%igen Natronlauge versetzt, und es werden anschliessend 44 Teile Amidoschwefelsäure eingetragen. Die Dispersion wird sodann wie im Vergleichsbeispiel 2b (oder 1b) sprühgetrocknet. Das erhaltene Farbstoffpulver besitzt eine Selbstentzündungstemperatur von 190°C (bestimmt nach Grewer).

Beispiel 4

Man gibt der gemäss dem Vergleichsbeispiel 2a erhaltenen Farbstoffdispersion zunächst 110 Teile einer 33%igen wässrigen Natronlauge, sodann 88 Teile Amidoschwefelsäure hinzu und sprühtrocknet diese Farbstoffdispersion. Das erhaltene Farbstoffpulver besitzt eine Selbstentzündungstemperatur von 200°C (bestimmt nach Grewer).

Beispiel 5

Man verfährt gemäss dem Beispiel 4, setzt jedoch dort die doppelte Menge an Natronlauge und sodann die doppelte Menge an Amidosulfonsäure hinzu.

Nach Sprühtrocknung erhält man ein Farbstoffpulver mit einer Selbstentzündungstemperatur von 210°C (bestimmt nach Grewer).

Beispiel 6

Der nach Vergleichsbeispiel 3a erhaltenen Farbstofflösung werden 85 Teile Natrium-amidosulfat zugegeben. Sie wird sodann wie im Vergleichsbeispiel 3b sprühgetrocknet. Das erhaltene Farbstoffpulver besitzt eine Selbstentzündungstemperatur (nach Grewer) von 180°C.

Beispiel 7

Man verfährt wie im Beispiel 6 angegeben, verwendet aber die doppelte Menge Natrium-amidosulfat. Die Selbstentzündungstemperatur des erhaltenen Farbstoffpulvers liegt bei 190°C.

Vergleichsbeispiel 4

a) 212 Teile 4,4'-Diamino-3,3'-dimethyl-diphenyl werden in 600 Teilen Wasser verrührt; sodann werden 580 Teile 32%ige wässrige Salzsäure langsam zugegeben. Nach dem Abkühlen auf 5–10°C wird durch Zugabe von 138 Teilen Natriumnitrit, gelöst in wenig Wasser, diazotiert. Die Temperatur wird durch Aussenkühlung gehalten.

Nach beendeter Diazotierung wird von geringen Mengen Ungelöstem abfiltriert und das klare Filtrat zu einer Lösung von 319 Teilen 1-Amino-8-hydroxy-naphthalin-3,6-disulfonsäure in 5000 Teilen Wasser und 120 Teilen 33%iger wässriger Natronlauge gegeben. Der pH-Wert wird durch Zugabe weiterer Natronlauge bei 8–9 gehalten. Die Temperatur soll 15°C sein. Nach einstündigem Nachrühren wird die erhaltene Farbstofflösung zu einer Lösung von 216 Teilen Resorcinpech in 1000 Teilen Wasser und 140 Teilen 32%iger wässriger Natronlauge gegeben und der pH-Wert durch gleichzeitige Natronlaugezugabe bei 10,5 und die Temperatur durch Eiszugabe bei 15°C gehalten. Anschliessend wird noch eine Diazoniumsalzlösung zugegeben, die durch Lösen von 137 Teilen 2-Amino-benzoesäure in 500 Teilen Wasser und 290 Teilen 32%iger wässriger Salzsäure und anschliessende Zugabe von 69 Teilen Natriumnitrit in Form einer konzentriert wässrigen Lösung unter Aussenkühlung erhalten wurde. PH-Wert und Temperatur werden bei 10,5 bzw. 15°C gehalten.

b) Diese Farbstofflösung wird in einem Sprühtrockner mit Scheibenzerstäubung getrocknet. Das erhaltene Farbstoffpulver besitzt eine Selbstentzündungstemperatur (bestimmt nach Grewer) von 150°C.

Beispiel 8

Der nach Vergleichsbeispiel 4a erhaltenen Farbstofflösung werden 570 Teile Natriumamidosulfate zugegeben. Sie wird sodann wie im Vergleichsbeispiel 4b sprühgetrocknet. Das erhaltene Farbstoffpulver besitzt eine Selbstentzündungstemperatur von 190°C.

Vergleichsbeispiel 5

a) 139,5 Teile 4,4'-Diamino-diphenylamin-2-sulfonsäure werden, wie in Vergleichsbeispiel 1 angegeben, diazotiert und zu einer Lösung von 72 Teilen 1-Naphthol in 500 Teilen Wasser, 60 Teilen 33%iger wässriger Natronlauge und 10,6 Teilen Natriumcarbonat gegeben. Der pH-Wert wird bei 10,5 und die Temperatur bei 15°C gehalten. Nach 15 Minuten wird diese Farbstofflösung in eine Lösung von 108 Teilen Resorcinpech in 500 Teilen Wasser und 70 Teilen 33%iger wässriger Natronlauge eingetragen. PH-Wert und Temperatur werden bei 10,5 und 15°C gehalten.

b) Diese Farbstofflösung wird in einem Sprühtrockner mit Scheibenzerstäubung getrocknet. Das erhaltene Farbstoffpulver besitzt eine Selbstentzündungstemperatur von 170°C (best. nach Grewer).

Beispiel 9

Zu der nach Vergleichsbeispiel 5a erhaltenen Farbstofflösung werden 88 Teile Natrium-amidosulfat gegeben. Sie wird sodann wie im Vergleichsansatz 5b gesprüht. Die Zersetzungstemperatur (bestimmt nach Grewer) beträgt 200°C.

Beispiel 10

Arbeitet man wie in Beispiel 9 angegeben, verwendet aber die doppelte Menge Natriumamidosulfat, so beträgt die Zersetzungstemperatur 220°C.

**Patentansprüche**

1. Verwendung eines Ammonium-, Alkali- oder Erdalkalisalzes, oder eines Gemisches derselben, der Amidoschwefelsäure, der Imido-bisschwefelsäure oder der Nitrido-trisschwefelsäure, oder eines Gemisches derselben, zur Erhöhung der Selbstentzündungstemperatur von organischen Farbstoffen, insbesondere wasserlöslichen organischen Farbstoffen, insbesondere solchen Farbstoffpulvern.

2. Verwendung nach Anspruch 1, dadurch gekennzeichnet, dass der wasserlösliche organische Farbstoff ein Resorcinpechfarbstoff ist.

3. Farbstoffpräparationen von organischen Farbstoffen, insbesondere wasserlöslichen organischen Farbstoffen, gekennzeichnet durch den Gehalt an 5 bis 100 Gew.-%, bezogen auf den organischen Farbstoff, an einem Ammonium-, Alkalimetall- oder Erdalkalimetallsalz, oder einem Gemisch derselben, der Amidoschwefelsäure, der Imido-bisschwefelsäure oder der Nitrido-trisschwefelsäure, oder einem Gemisch derselben.

4. Farbstoffpräparationen von wasserlöslichen organischen Farbstoffen nach Anspruch 3, dadurch gekennzeichnet, dass der wasserlösliche organische Farbstoff ein Resorcinpechfarbstoff ist.

5. Farbstoffpräparationen von wasserlöslichen organischen Farbstoffen nach Anspruch 3, dadurch gekennzeichnet, dass der Farbstoff ein Azokupplungsprodukt ist, das durch Azokupplungsreaktion mit Resorcinpech als Kupplungskomponente mit einem diazotierten bzw. tetrazotierten 3- oder 4-Amino-diphenylamin, einem 3,3'- oder 3,4'- oder 4,4'-Diamino-diphenyl oder -diphenylamin oder einem 1,3- oder 1,4-Diaminobenzol (wobei die Benzolkerne dieser Diazo- bzw. Tetrazokomponenten noch durch einen oder zwei Substituenten aus der Gruppe Sulfo, Nitro, Chlor, Alkyl von 1 bis 4 C-Atomen, Alkoxy von 1 bis 4 C-Atomen und Carboxy substituiert sein können) erhältlich ist.

6. Verfahren zur sicheren Sprühtrocknung einer wässrigen Lösung, Suspension oder Dispersion eines organischen Farbstoffes durch Erhöhung der Selbstentzündungstemperatur des organischen Farbstoffes, dadurch gekennzeichnet, dass man die Sprühtrocknung der wässrigen Lösung, Suspension oder Dispersion zusammen mit einem darin gelösten Ammonium-, Alkalimetall- oder Erdalkalimetallsalz, oder einem Gemisch derselben, der Amidoschwefelsäure, der Imido-bisschwefelsäure oder Nitrido-trisschwefelsäure, oder einem Gemisch derselben, durchführt.

7. Verfahren nach Anspruch 6, dadurch gekennzeichnet, dass der organische Farbstoff ein wasserlöslicher Resorcinpechfarbstoff ist.

8. Verfahren nach Anspruch 6, dadurch gekennzeichnet, dass der organische Farbstoff als wasserlöslicher Farbstoff ein Azokupplungsprodukt ist, das durch Azokupplungsreaktion mit Resorcinpech als Kupplungskomponente mit einem diazotierten bzw. tetrazotierten 3- oder 4-Aminodiphenylamin, einem 3,3'- oder 3,4'- oder 4,4'-Diamino-diphenyl oder -diphenylamin oder einem 1,3- oder 1,4-Diaminobenzol (wobei die Benzolkerne dieser Diazo- bzw. Tetrazokomponenten noch durch einen oder zwei Substituenten aus der Gruppe Sulfo, Nitro, Chlor, Alkyl von 1 bis 4 C-Atomen, Alkoxy von 1 bis 4 C-Atomen und Carboxy substituiert sein können) erhältlich ist.

## Claims

1. The use of an ammonium, alkali metal or alkaline earth metal salt, or a mixture thereof, of amidosulfuric acid, imidodisulfuric acid or nitrilotrisulfuric acid, or a mixture thereof, for raising the self-ignition temperature of organic dyestuffs, in particular water-soluble organic dyestuffs, and particularly of dyestuff powders of those dyes.

2. Use according to Claim 1, characterized by that the water-soluble organic dyestuff is a resorcinol pitch dyestuff.

3. Dyestuff compositions of organic dystuffs, in particular water-soluble organic dyestuffs, characterized by the content of 5 to 100% by weight, relative to the organic dyestuff, of an ammonium, alkali metal or alkaline earth metal salt, or a mixture thereof, of amidosulfuric acid, imidodisulfuric acid or nitrilotrisulfuric acid, or a mixture thereof.

4. Dyestuff compositions of water-soluble organic dyestuffs, according to Claim 3, characterized by that the watersoluble organic dyestuff is a resorcinol pitch dyestuff.

5. Dyestuff compositions of water-soluble organic dyestuffs, according to Claim 3, characterized by that the dyestuff is an azo-coupling product which is obtainable by an azo-coupling reaction of resorcinol pitch as the coupling component with a diazotized, respectively tetrazotized 3-amino-diphenylamine or 4-amino-diphenylamine, a 3,3'- or 3,4'- or 4,4'-diamino-diphenyl or a 3,3'- or 3,4'- or 4,4'-diamino-diphenylamine or a 1,3- or 1,4-diaminobenzene (it being possible for the benzene nuclei of these diazo, respectively tetrazo compounds also to be substituted by one or two substituents belonging to the group comprising sulfo, nitro, chlorine, alkyl having 1 to 4 carbon atoms, alkoxy having 1 to 4 carbon atoms and carboxy).

6. A process for a safe spray-drying of an aqueous solution, suspension or dispersion of an organic dyestuff by raising the temperature of self-ignition of the organic dyestuff, characterized by that the spray-drying of the aqueous solution, suspension or dispersion is carried out together with an ammonium, alkali metal or alkaline earth metal salt, or a mixture thereof, of amidosulfuric acid, imidodisulfuric acid or nitrilotrisulfuric acid, or a mixture thereof, dissolved in the dyestuff solution, suspension or dispersion.

7. A process according to claim 6, characterized by that the dyestuff is a water-soluble resorcinol pitch dyestuff.

8. A process according to claim 6, characterized by that the organic dyestuff is, as a water-soluble dyestuff, an azo-coupling product which is obtainable by an azo-coupling reaction of resorcinol pitch as the coupling component with a diazotized, respectively tetrazotized 3-amino-diphenylamine or 4-amino-diphenylamine, a 3,3'- or 3,4'- or 4,4'-diamino-diphenyl or a 3,3'- or 3,4'- or 4,4'-diamino-diphenylamine or a 1,3- or 1,4-diaminobenzene (it being possible for the benzene nuclei of these diazo, respectively tetrazo compounds also to be substituted by one or two substituents belonging to the group comprising sulfo, nitro, chlorine, alkyl having 1 to 4 carbon atoms, alkoxy having 1 to 4 carbon atoms and carboxy).

## Revendications

1. Utilisation d'un sel d'ammonium, alcalin ou alcalinoterreux, ou d'un mélange de ceux-ci, de l'acide amidosulfurique, de l'acide imidobisulfurique ou de l'acide nitrido-trisulfurique ou d'un mélange de ceux-ci, pour accroître la température d'auto-inflammation de colorants organiques, notamment de colorants organiques solubles dans l'eau, notamment sous forme de poudres.

2. Utilisation selon la revendication 1, caractérisée en ce que le colorant organique soluble dans l'eau est un colorant à base de poix de résorcine.

3. Préparations tinctoriales de colorants organiques, notamment de colorants organiques solubles dans l'eau, caractérisées par une teneur comprise entre 5 et 100% en poids, rapportée au colorant organique, d'un sel d'ammonium, de métal alcalin, ou de métal alcalinoterreux, ou d'un mélange de ceux-ci, de l'acide amidosulfurique, de l'acide imidobisulfurique ou de l'acide nitridotrisulfurique, ou d'un mélange de ceux-ci.

4. Préparations tinctoriales de colorants organiques solubles dans l'eau selon la revendication 3, caractérisées en ce que le colorant organique soluble dans l'eau est un colorant à base de poix de résorcine.

5. Préparations tinctoriales de colorants organiques solubles dans l'eau selon la revendication 3, caractérisées en ce que le colorant est un produit de copulation azoïque obtenu par réaction de copulation azoïque entre une poix de résorcine comme composant de copulation et une 3- ou 4-amino-diphénylamine diazotée ou tétraazotée, un 3,3'- ou 3,4'- ou 4,4'-diaminodiphényle ou diphénylamine ou un 1,3- ou 1,4-diaminobenzène diazotés ou tétraazotés (les noyaux de benzène de ces composants diazotés ou tétraazotés pouvant être substitués par un ou deux substituants du groupe sulfo, nitro, chloro, alkyle ayant de 1 à 4 atomes C, alcoxy ayant de 1 à 4 atomes C et carboxy).

6. Procédé de séchage sûr par pulvérisation d'une solution, suspension ou dispersion aqueuse, d'un colorant organique par élévation de la température d'autoinflammation du colorant organique, caractérisé en ce que l'on effectue le séchage par pulvérisation de la solution, suspension ou dispersion aqueuse avec un sel d'ammonium, de métal alcalin ou de métal alcalinoterreux dissous, ou d'un mélange de ceux-ci, de l'acide amidosulfurique, de l'acide imidobisulfurique ou de l'acide nitrido-trisulfurique ou d'un mélange de ceux-ci.

7. Procédé suivant la revendication 6, caractérisé en ce que le colorant organique est un colorant à base de poix de résorcine soluble dans l'eau.

8. Procédé selon la revendication 6, caractérisé en ce que le colorant organique soluble dans l'eau est un produit de copulation azoique obtenu par réaction de copulation azoique entre une poix de résorcine, composant de copulation, avec une 3- ou 4-amino-diphénylamine, un 3,3'-, 3,4'- ou 4,4'-diaminodiphényle ou diphénylamine ou 1,3- ou 1,4-diaminobenzène diazotés ou tétraazotés (les noyaux de benzène de ces composants diazotés ou tétraazotés pouvant être substitués par un ou deux substituants du groupe sulfo, nitro, chloro, alkyle ayant de 1 à 4 atomes C, alcoxy ayant de 1 à 4 atomes C et carboxy).